(19) Europäisches Patentamt
European Patent Office
Office européen des brevets

(11) EP 4 513 297 A2

(12) EUROPEAN PATENT APPLICATION
published in accordance with Art. 153(4) EPC

(43) Date of publication:
26.02.2025 Bulletin 2025/09

(51) International Patent Classification (IPC):
G06F 1/16 (2006.01)        G09F 9/30 (2006.01)
H04M 1/02 (2006.01)

(21) Application number: 24714130.2

(22) Date of filing: 20.03.2024

(86) International application number:
PCT/KR2024/003523

(87) International publication number:
WO 2025/009690 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.07.2023 KR 20230085937
26.07.2023 KR 20230097847

(71) Applicant: Samsung Electronics Co., Ltd.
Suwon-si, Gyeonggi-do 16677 (KR)

(72) Inventors:
• KIM, Seonghoon
Suwon-si, Gyeonggi-do 16677 (KR)
• PARK, Chaebin
Suwon-si, Gyeonggi-do 16677 (KR)

(74) Representative: HGF
HGF Limited
1 City Walk
Leeds LS11 9DX (GB)

(54) FOLDABLE ELECTRONIC DEVICE COMPRISING PLATE FOR SUPPORTING DISPLAY

(57) A foldable electronic device is provided. The foldable electronic device includes a display including a first display part, a second display part spaced apart from the first display part, and a third display part extended from the first display part to the second display part and configured to be bent based on a folding axis when the foldable electronic device is folded. The foldable electronic device includes a plate disposed under the display to support the display. The plate includes a first plate part, a second plate part spaced apart from the first plate part, and a third plate part extended from the first plate part to the second plate part and arranged with respect to the third display part.

FIG. 4

# Description

## [Technical Field]

The following descriptions relate to a foldable electronic device including a plate for supporting a display.

## [Background Art]

A foldable electronic device may include a display. The display may form at least a portion of the front of the foldable electronic device. The display may include a display part configured to be bent in a folded state of the foldable electronic device. For example, a shape of the display part may be changed according to a change from the folded state of the foldable electronic device to a unfolded state of the foldable electronic device and a change from the unfolded state of the foldable electronic device to the folded state of the foldable electronic device.

The above-described information may be provided as a related art for the purpose of helping to understand the present disclosure. No claim or determination is raised as to whether any of the above-described information may be applied as a prior art related to the present disclosure.

## [Disclosure]

## [Technical Solution]

A foldable electronic device is provided. The foldable electronic device may comprise a display including a first display part (or portion or section), a second display part spaced apart from the first display part, and a third display part extended (or extending) from the first display part to the second display part and configured to be bent (e.g. based on a folding axis, or about a folding axis, or relative to a folding axis) when the foldable electronic device is folded. In other words, the third display part may be arranged between the first and second display parts and may connect the first and second display parts. The foldable electronic device may comprise a plate disposed under the display to support the display. The plate may include a first plate part (or portion or section), a second plate part spaced apart from the first plate part, and a third plate part extended (or extending) from the first plate part to the second plate part. The third plate part may be arranged with respect to the third display part, for example to support the third display part when the foldable electronic device is in at least one of its folded and unfolded states or configurations. The third plate part may be configured to be at least partially bent when the foldable electronic device is folded. The third plate part may include a first portion positioned along (or adjacent, or next to) a first boundary between the first plate part and the third plate part, a second portion positioned along (or adjacent, or next to) a second boundary between the second plate part and the third plate part, and a third portion between the first portion and the second portion. In other words, the third portion may be a central or middle portion of the third plate part, extending between and connecting the first portion and the second portion. Each of the first portion and the second portion may include first slits (e.g. respective first slits, or respective pluralities of first slits) each having a first length and having a longitudinal direction parallel to the folding axis, and first bridges (e.g. respective first bridges, or respective pluralities of first bridges) positioned between the first slits. In other words, each first bridge may be positioned (or located, or arranged, or defined) between a respective pair of first slits. The third portion may include second slits (or a plurality of second slits) each having a second length longer than the first length and having a longitudinal direction parallel to the folding axis, and second bridges (or a plurality of second bridges) positioned between the second slits. In other words, each second bridge may be positioned (or located, or arranged, or defined) between a respective pair of second slits. The first bridges may be aligned to centers of the second slits in a direction perpendicular to the folding axis. In other words, a first bridge (or each first bridge) may be aligned to a longitudinally central point of a respective second slit. The configuration of slits and bridges may enable the third portion to be more flexible (i.e. have lower rigidity, or lower stiffness) than the first and second portions. Thus, the stiffness of the third plate part may be graded; its stiffness may be greatest at its edge (first and second) portions, and smallest at its central (third) portion. In certain embodiments, the stiffness of the central (or middle, or third) portion may itself be graded (for example by variations in the pattern or arrangement or slits, bridges, and optionally holes). Furthermore, the configuration of slits and bridges may enable more uniform distribution of stresses in the third plate part, and improve its longevity.

A foldable electronic device is provided. The foldable electronic device may comprise a housing including a first housing part and a second housing part. The foldable electronic device may comprise a hinge structure for an unfolded state and a folded state of the foldable electronic device, the hinge structure including a first support member, a first rotation member rotatably coupled to the first support member and coupled to the first housing part, a second rotation member rotatably coupled to the first support member and coupled to the second housing part. The hinge structure may further include a second support member coupled to the first support member and separated from the first rotation member and the second rotation member. The foldable electronic device may comprise a display forming at least portion of a front of the housing. The display may include a first display part, a second display part spaced apart from the first display part, and a third display part extended from the first display part to the second display part and configured to bend between the first display part and the second display part in the folded state provided by the hinge structure. The foldable electronic device may comprise a plate disposed under the display to support the display and including a surface facing the first rotation member, the second rotation member, and the second support member. The plate may include a first plate part, a second plate part spaced apart from the first plate part, and a third plate part extended from the first plate part to the second plate part and arranged with respect to the third display part. The third plate part may be configured to bend in the folded state. The second support member may be configured to support the third display part moved to the second support member according to change from the unfolded state to the folded state. The third plate part may include a first portion arranged with respect to a first gap between the first rotation member and the second support member, a second portion arranged with respect to a second gap between the second rotation member and the second support member, a third portion positioned between the first portion and a first boundary between the first plate part and the third plate part, and a fourth portion positioned between the second portion and a second boundary between the second plate part and the third plate part. Widths of first slits in the first portion and second slits in the second portion may be narrower than widths of third slits in the third portion and fourth slits in the fourth portion. The width of each of the first slits and the second slits may indicate a length of each of the first slits and the second slits in a direction perpendicular to a folding axis of the foldable electronic device. The width of each of the third slits and the fourth slits may indicate a length of each of the third slits and the fourth slits in a direction perpendicular to a folding axis of the foldable electronic device.

**[Description of the Drawings]**

FIG. 1 is a block diagram of an electronic device in a network environment according to various embodiments.

FIG. 2A illustrates an example of an unfolded state of an exemplary electronic device.

FIG. 2B illustrates an example of a folded state of an exemplary electronic device.

FIG. 2C is an exploded view of an exemplary electronic device.

FIG. 3 is a top plan view illustrating an exemplary electronic device in an unfolded state.

FIG. 4 is a cross-sectional view illustrating an example in which an exemplary electronic device is cut along line A-A' of FIG. 3.

FIGS. 5 to 7 illustrate an example of a third plate part including first slits in each of a first portion and a second portion and second slits in a third portion.

FIG. 8 illustrates an example of a third plate part including slits and holes.

FIGS. 9 to 11 illustrate an example of shapes of openings arranged in a single pattern within a third plate part.

FIG. 12 illustrates an example of a positional relationship between a hinge structure and a third plate part.

FIG. 13 illustrates an example of a third plate part including slits having different widths.

FIG. 14 illustrates an example of thickness of a third plate part.

**[Mode for Invention]**

Hereinafter, embodiments of the present disclosure will be described in detail with reference to drawings so that those having ordinary knowledge in the art to which the present disclosure belongs may easily implement it. However, the present disclosure may be implemented in various different forms and is not limited to the embodiments described herein. In relation to the description of the drawings, identical or similar reference numerals may be used for identical or similar components. In addition, in the drawings and related descriptions, descriptions of well-known features and configurations may be omitted for clarity and brevity.

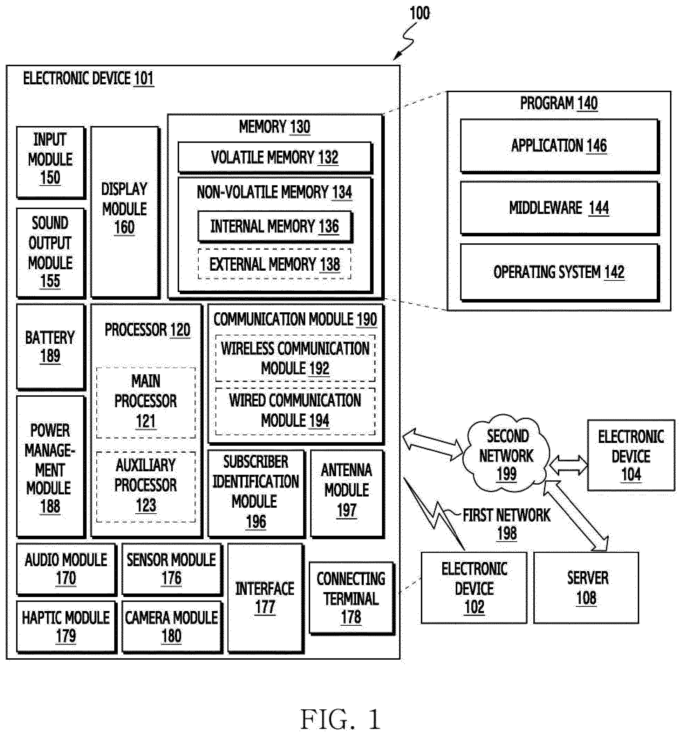

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning.

The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.

The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

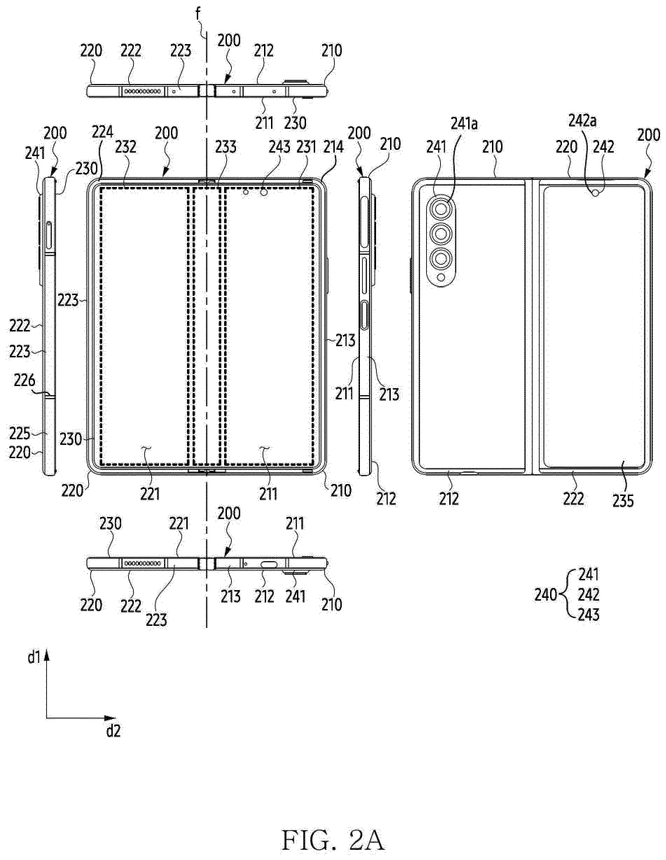

FIG. 2A illustrates an example of an unfolded state of an exemplary electronic device.

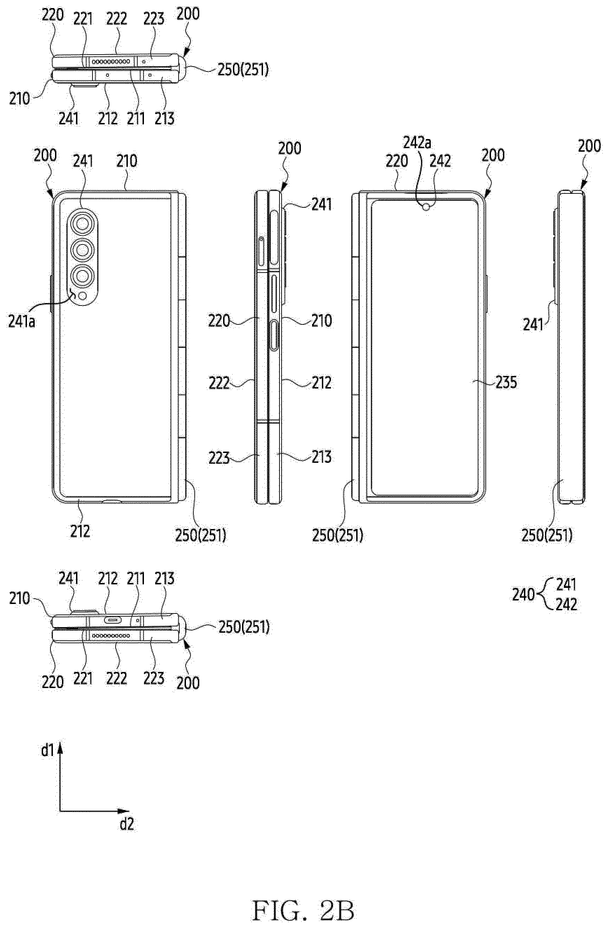

FIG. 2B illustrates an example of a folded state of an exemplary electronic device.

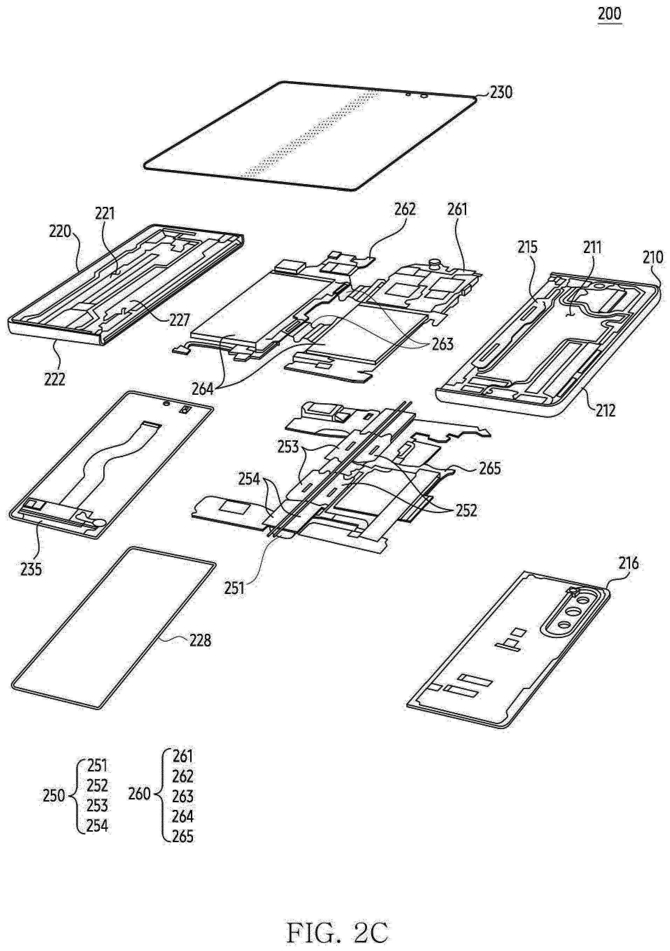

FIG. 2C is an exploded view of an exemplary electronic device.

Referring to FIGS. 2A, 2B, and 2C, an electronic device 200 (e.g., the electronic device 101 of FIG. 1) may include a housing including a first housing part 210 and a second housing part 220, a display 230, at least one camera 240 (e.g., the camera module 180 of FIG. 1), a hinge structure 250, and/or at least one electronic component 260.

The first housing part 210 and the second housing part 220 may form at least a portion of the outer surface of the electronic device 200 that may be gripped by a user. At least a portion of the outer surface of the electronic device 200 defined by the first housing part 210 and the second housing part 220 may contact a portion of a user's body when the electronic device 200 is used by the user. For example, the first housing part 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 and a periphery of the second surface 212. The first surface 211, the second surface 212, and the first side surface 213 may define an inner space of the first housing part 210. For example, the first housing part 210 may provide a space formed by the first surface 211, the second surface 212, and the first side surface 213 as a space for arranging components of the electronic device 200.

For example, the second housing part 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 and a periphery of the fourth surface 222. The third surface 221, the fourth surface 222, and the second side surface 223 may define an inner space of the second housing part 220. For example, the second housing part 220 may provide a space formed by the third surface 221, the fourth surface 222, and the second side surface 223 surrounding at least a portion of the third surface 221 and the fourth surface 222 as a space for mounting components of the electronic device 101. For example, the second housing part 220 may be coupled to the first housing part 210 rotatably (or pivotally) with respect to the first housing part 210.

For example, each of the first housing part 210 and the second housing part 220 may include a first protection member 214 and a second protection member 224. The first protection member 214 and the second protection member 224 may be disposed on the first surface 211 and the third surface 221 along a periphery of the display 230. For example, the first protection member 214 and the second protection member 224 may reduce the inflow of a foreign substance (e.g., dust or moisture) through a gap between the display 230 and the first housing part 210 and the second housing part 220. For example, the first protection member 214 may surround a periphery of a first display area 231 of the display 230, and the second protection member 224 may surround a periphery of a second display area 232 of the display 230. The first protection member 214 may be attached to the first side surface 213 of the first housing part 210 or may be integrally formed with the first side surface 213. The second protection member 224 may be attached to the second side surface 223 of the second housing part 220 or may be integrally formed with the second side surface 223.

For example, the first side surface 213 and the second side surface 223 may include a conductive material, a non-conductive material, or a combination thereof. For example, the second side surface 223 may include at least one conductive member 225 and at least one non-conductive member 226. At least one conductive member 225 may include a plurality of conductive members spaced apart from each other. At least one non-conductive member 226 may be disposed between a plurality of conductive members. A plurality of conductive members may be disconnected from each other by at least one non-conductive member 226 disposed between the plurality of conductive members. For example, a plurality of conductive members and a plurality of non-conductive members may form an antenna radiator. The electronic device 200 may be configured to communicate with an external electronic device through an antenna radiator formed by a plurality of conductive members and a plurality of non-conductive members.

The display 230 may be configured to display visual information. For example, the display 230 may form at least a portion of the front (or front surface) of the electronic device 200 or the housing. For example, the display 230 may be disposed across over the hinge structure 250. For example, the display 230 may include a first display area 231 formed on the first surface 211 of the first housing, a second display area 232 formed on the third surface 221 of the second housing, and a third display area 233 formed between the first display area 231 and the second display area 232. The first display area 231, the second display area 232, and the third display area 233 may form a front surface of the display 230. For example, the display 230 may further include a sub-display panel 235 forming at least a portion of the fourth surface 222 of the second housing part 220. The display 230 may be referred to as a flexible display. The display 230 may include a window exposed toward the outside of the electronic device 200. The window may protect a surface of the display 230 and include a substantially transparent material. The window may include glass (e.g., ultra-thin glass (UTG)) and/or a polymer (e.g., polyimide (PI)), but is not limited thereto.

At least one camera 240 may be configured to obtain an image for a subject, based on receiving light from the outside of the electronic device 200. For example, the at least one camera 240 may include first cameras 241, a second camera 242, and a third camera 243. The first cameras 241 may be disposed in the first housing part 210. For example, the first cameras 241 are disposed inside the first housing part 210, and at least a portion of each of the first cameras 241 may be exposed through the second surface 212 of the first housing part 210 to be visible. The first cameras 241 may be supported by a bracket (not shown) in the first housing part 210. The first housing part 210 may include at least one opening 241a superimposed on the first cameras 241 when the second surface 212 is viewed from above. The first cameras 241 may obtain an image based on receiving light from the outside of the electronic device 200 through at least one opening 241a.

For example, the second camera 242 may be disposed in the second housing part 220. For example, the second camera 242 may be disposed inside the second housing part 220, and may be exposed through the sub-display panel 235 to be visible. The second housing part 220 may include at least one opening 242a superimposed on the second camera 242 when the fourth surface 222 is viewed from above. The second camera 242 may obtain an image (e.g., a selfie image) based on receiving light from the outside of the electronic device 200 through at least one opening 242a.

For example, the third camera 243 may be disposed in the first housing part 210. For example, the third camera 243 may be disposed inside the first housing part 210, and at least a portion of the third camera 243 may be exposed through the first surface 211 of the first housing part 210 to be visible. For example, the third camera 243 may be disposed inside the first housing part 210, and at least a portion of the third camera 243 may be exposed through the first display area 231 of the display 230 to be visible. The first display area 231 of the display 230 may include at least one opening (not shown) superimposed on the third camera 243, when the display 230 is viewed from above. The third camera 243 may obtain an image based on receiving light from the outside of the display 230 through at least one opening.

For example, the second camera 242 and the third camera 243 may be disposed under the display 230 (e.g., in a direction toward the inside of the first housing part 210 or the inside of the second housing part 220). For example, the second camera 242 and the third camera 243 may be a under display camera (UDC). For example, when the second camera 242 and the third camera 243 are under display cameras, an area of the display 230 corresponding to a position of each of the second camera 242 and the third camera 243 may not be an inactive area. For example, when the second camera 242 and the third camera 243 are under display cameras, an area of the display 230 corresponding to a position of each of the second camera 242 and the third camera 243 may have a pixel density lower than another area of the display 230. The inactive area of the display 230 may mean an area of the display 230 that does not include a pixel or does not emits light to the outside of the electronic device 200. For example, the second camera 242 and the third camera 243 may be a punch hole camera. For example, when the second camera 242 and the third camera 243 are punch hall cameras, an area of the display 230 corresponding to a position of each of the second camera 242 and the third camera 243 may be an inactive area. For example, when the second camera 242 and the third camera 243 are punch hall cameras, an area of the display 230 corresponding to a position of each of the second camera 242 and the third camera 243 may include an opening.

For example, the hinge structure 250 may rotatably connect the first housing part 210 and the second housing part 220. The hinge structure 250 may be disposed between the first housing part 210 and the second housing part 220 of the electronic device 200 so that the electronic device 200 may be bent, curved, or folded. For example, the hinge structure 250 may be disposed between a portion of the first side surface 213 and a portion of the second side surface 223, which face each other. The hinge structure 250 may be used to change a state of the electronic device 200 to an unfolded state in which the first surface 211 of the first housing part 210 and the third surface 221 of the second housing part 220 face substantially the same direction, or to a folded state in which the first surface 211 and the third surface 221 face each other. When the electronic device 200 is in the folded state, the first housing part 210 and the second housing part 220 may be stacked or superimposed.

For example, when the electronic device 200 is in the folded state, a direction in which the first surface 211 faces and a direction in which the third surface 221 faces may be different from each other. For example, when the electronic device 200 is in the folded state, the direction in which the first surface 211 faces and the direction in which the third surface 221 faces may be opposite to each other. For example, when the electronic device 200 is in the folded state, the direction in which the first surface 211 faces and the direction in which the third surface 221 faces may be inclined with respect to each other.

For example, the electronic device 200 may be foldable based on a folding axis f. The folding axis f may mean an imaginary line being extending through the hinge cover 251 in a direction (e.g., dl of FIGS. 2A and 2B) substantially parallel to a longitudinal direction of the electronic device 200, but is not limited thereto. For example, the folding axis f may be an imaginary line extending in a direction (e.g., d2 in FIGS. 2A and 2B) substantially perpendicular to the longitudinal direction of the electronic device. When the folding axis f is extended in a direction substantially perpendicular to the longitudinal direction of the electronic device 200, the hinge structure 250 may be extended alongside the folding axis f (or along the folding axis f) to connect the first housing part 210 and the second housing part 220. The first housing part 210 and the second housing part 220 may be rotatable by the hinge structure 250 being extended in a direction substantially perpendicular to the longitudinal direction of the electronic device 200.

For example, the hinge structure 250 may include a hinge cover 251, a first hinge plate 252, a second hinge plate 253, and a hinge module 254. The hinge cover 251 may cover internal components of the hinge structure 250 and form an outer surface of the hinge structure 250. According to an embodiment, the hinge cover 251 covering the hinge structure 250 may be at least partially exposed between the first housing part 210 and the second housing part 220 when the electronic device 200 is in the folded state. As a non-limited example, when the electronic device 200 is in the unfolded state, the hinge cover 251 may not be exposed by being covered by the first housing part 210 and the second housing part 220.

For example, the first hinge plate 252 and the second hinge plate 253 may be coupled with the first housing part 210 and the second housing part 220, respectively, to rotatably connect the first housing part 210 and the second housing part 220. For example, the first hinge plate 252 may be coupled with a first front bracket 215 of the first housing part 210, and the second hinge plate 253 may be coupled with a second front bracket 227 of the second housing part 220. As the first hinge plate 252 and the second hinge plate 253 are coupled to the first front bracket 215 and the second front bracket 227, respectively, the first housing part 210 and the second housing part 220 may be rotatable according to the rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f, by including gears capable of being engaged with each other and rotated. For example, the hinge modules 254 may be plural. For example, a plurality of hinge modules 254 may be disposed at both ends of the first hinge plate 252 and the second hinge plate 253 to be spaced apart from each other.

For example, the display 230 may be unfolded or folded by the first hinge plate 252 while a state of the electronic device 200 is changed.

For example, the first hinge plate 252 may be rotated with respect to the hinge cover 251, according to the rotation of the first housing part 210 for changing the unfolded state of the electronic device 200 to the folded state of the electronic device 200.

As a non-limited example, a first angle at which the first hinge plate 252 is rotated with respect to the hinge cover 251 to change the unfolded state of the electronic device 200 to the folded state of the electronic device 200 may be the same as a second angle at which the first housing part 210 is rotated with respect to the hinge cover 251 to change the unfolded state of the electronic device 200 to the folded state of the electronic device 200.

As a non-limited example, the first angle may be different from the second angle. For example, the first angle may be greater than the second angle. For example, in the folded state of the electronic device 200, the first hinge plate 252 may be inclined with respect to the first surface 211 of the first housing part 210.

For example, while a state of the electronic device 200 is changed, the display 230 may be unfolded or folded by the second hinge plate 253.

For example, the second hinge plate 253 may be rotated with respect to the hinge cover 251, according to the rotation of the second housing part 220 for changing the unfolded state of the electronic device 200 to the folded state of the electronic device 200.

As a non-limited example, a third angle at which the second hinge plate 253 is rotated with respect to the hinge cover 251 to change the unfolded state of the electronic device 200 to the folded state of the electronic device 200 may be the same as a fourth angle at which the second housing part 220 is rotated with respect to the hinge cover 251 to change the unfolded state of the electronic device 200 to the folded state of the electronic device 200.

As a non-limited example, the third angle may be different from the fourth angle. The third angle may be greater than the fourth angle. For example, in the folded state of the electronic device 200, the second hinge plate 253 may be inclined with respect to the third surface 221 of the second housing part 220.

For example, the first housing part 210 may include a first front bracket 215 and a first rear bracket 216, and the second housing part 220 may include a second front bracket 227 and a second rear bracket 228. The first front bracket 215 and the first rear bracket 216 may support components of the electronic device 200. The first front bracket 215 may define the first housing part 210 by being coupled to the first rear bracket 216.

The first rear bracket 216 may define a portion of an outer surface of the first housing part 210. The second front bracket 227 and the second rear bracket 228 may support components of the electronic device 200. The second front bracket 227 may define the second housing part 220 by being coupled to the second rear bracket 228. The second rear bracket 228 may define a portion of an outer surface of the second housing part 220. For example, the display 230 may be disposed on a surface of the first front bracket 215 and a surface of the second front bracket 227. The first rear bracket 216 may be disposed on another surface of the first front bracket 215 opposite to the surface of the first front bracket 215. The second rear bracket 228 may be disposed on another surface of the second front bracket 227 opposite to the surface of the second front bracket 227. The sub-display panel 235 may be disposed between the second front bracket 227 and the second rear bracket 228.

For example, a portion of the first front bracket 215 may be surrounded by the first surface 213, and a portion of the second front bracket 227 may be surrounded by the second side surface 223. As a non-limited example, the first front bracket 215 may be integrally formed with the first side surface 213, and the second front bracket 227 may be integrally formed with the second side surface 223. As a non-limited example, the first front bracket 215 may be formed separately from the first side surface 213, and the second front bracket 227 may be formed separately from the second side surface 223.

At least one electronic component 260 may be used to implement or execute various functions to be provided to a user. For example, at least one electronic component 260 may include a first printed circuit board 261, a second printed circuit board 262, a flexible printed circuit board 263, a battery 264 (e.g., the battery 189 of FIG. 1) and/or an antenna 265 (e.g., the antenna module 197 of FIG. 1). Each of the first printed circuit board 261 and the second printed circuit board 262 may form an electrical connection with components in the electronic device 200. For example, components (e.g., the processor 120 of FIG. 1) for implementing the overall function of the electronic device 200 may be disposed on the first printed circuit board 261, and electronic components for implementing some function of the first printed circuit board 261 may be disposed on the second printed circuit board 262. For example, components for the operation of the sub-display panel 235 disposed on the fourth surface 222 may be disposed on the second printed circuit board 262.

For example, the first printed circuit board 261 may be disposed in the first housing part 210. For example, the first printed circuit board 261 may be disposed on a surface of the first front bracket 215. For example, the second printed circuit board 262 may be disposed in the second housing part 220. For example, the second printed circuit board 262 may be spaced apart from the first printed circuit board 261 and disposed on a surface of the second front bracket 227. The flexible printed circuit board 263 may connect the first printed circuit board 261 and the second printed circuit board 262. For example, the flexible printed circuit board 263 may be extended from the first printed circuit board 261 to the second printed circuit board 262.

The battery 264, which is a device for supplying power to at least one component of the electronic device 200, may include, for example, a rechargeable secondary battery. At least a portion of the battery 264 may be disposed substantially on the same plane as the first printed circuit board 261 or the second printed circuit board 262.

The antenna 265 may be configured to receive power or a signal from the outside of the electronic device 200. According to an embodiment, the antenna 265 may be disposed between the first rear bracket 216 and the battery 264. For example, the antenna 265 may include a near field communication (NFC) antenna, an antenna module, and/or a magnetic secure transmission (MST) antenna. For example, the antenna 265 may perform short-range communication with an external device, or wirelessly transmit and receive power required for charging.

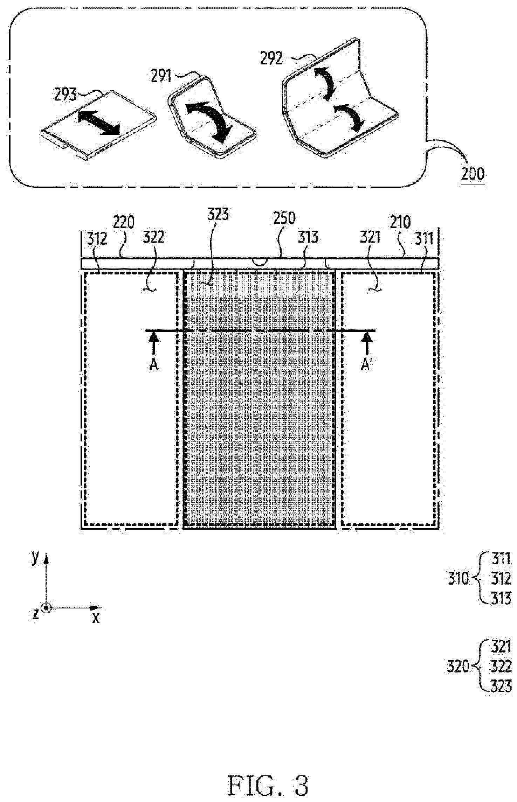

FIG. 3 is a top plan view illustrating an exemplary electronic device in an unfolded state.

Referring to FIG. 3, an electronic device 200 may be a foldable device having a folding axis (e.g., the folding axis f of FIG. 2A) in a longitudinal direction (e.g., dl of FIGS. 2A and 2B), as shown in FIGS. 2A, 2B, and 2C. The electronic device 200 may be replaced by an electronic device 291, which is a foldable device having a folding axis in a width direction perpendicular to the length direction, an electronic device 292, which is a foldable device (or a multi-foldable device) having two or more folding axes, or an electronic device 293, which is a rollable device being slid into a housing or slid out the housing. The following descriptions illustrating for the electronic device 200 are merely exemplary, and the following descriptions may be applied to the electronic device 291, the electronic device 292, and the electronic device 293. For example, a plate 320 illustrated by the following descriptions may be included in the electronic device 291 with the plate 320 rotated 90 degrees.

The electronic device 200 may include a first housing part 210, a second housing part 220, a hinge structure 250, a display 310 (e.g., the display 230 of FIGS. 2A, 2B, and 2C), and a plate 320.

The first housing part 210 may support a part of components of the electronic device 200. The first housing part 210 may be movable with respect to the second housing part 220. For example, the first housing part 210 may be rotatable with respect to the second housing part 220. For example, a rotation of the first housing part 210 may cause a rotation of a first hinge plate (e.g., the first hinge plate 252 of FIG. 2C).

The second housing part 220 may support another part of components of the electronic device 200.

The second housing part 220 may be movable with respect to the first housing part 210. For example, the second housing part 220 may be rotatable with respect to the first housing part 210. For example, a rotation of the second housing part 220 may cause a rotation of a second hinge plate (e.g., the second hinge plate 253 of FIG. 2C).

The hinge structure 250 may movably connect the first housing part 210 and the second housing part 220. The hinge structure 250 may be configured to change an unfolded state of the electronic device 200 to a folded state of the electronic device 200. The hinge structure 250 may be configured to change the folded state of the electronic device 200 to the unfolded state of the electronic device 200. For example, in the unfolded state of the electronic device 200, a direction in which a first surface (e.g., the first surface 211 of FIG. 2) of the first housing part 210 faces and a direction in which a third surface (e.g., the third surface 221 of FIG. 2) of the second housing part 220 faces may be substantially the same as a +z direction. For example, the unfolded state of the electronic device 200 may be changed to the folded state by the second housing part 220 rotated with respect to the first housing part 210 through the hinge structure 250. For example, in the folded state of the electronic device 200, the first surface 211 of the first housing part 210 may face the third surface 221 of the second housing part 220. For example, the folded state of the electronic device 200 may be changed to the unfolded state of the electronic device 200 by the second housing part 220 rotated with respect to the first housing part 210 through the hinge structure 250. For example, while the folded state of the electronic device 200 is changed to the unfolded state of the electronic device 200 or the unfolded state of the electronic device 200 is changed to the folded state of the electronic device 200, the electronic device 200 may have an intermediate state (e.g., a flex mode).

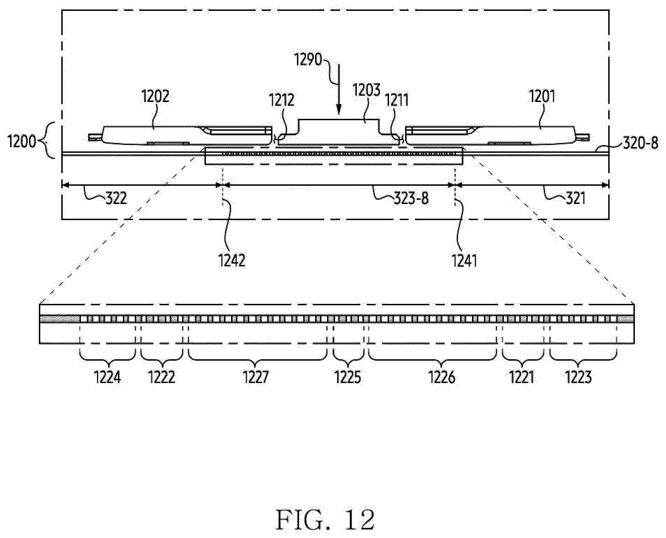

The hinge structure 250 is merely exemplary and does not limit implementations described or claimed within this document. For example, the hinge structure 250 may include other components that replace at least a part of the components illustrated above. As a non-limited example, the hinge structure 250 may be replaced with a hinge structure to be illustrated in FIGS. 12 to 13.

The display 310 may be configured to provide visual content. The display 310 may be disposed across over the hinge structure 250. The display 310 may form at least a part of the front of the first housing part 210 and at least a part of the front of the second housing part 220. The display 310 may be deformable by the second housing part 220 rotated with respect to the first housing part 210. For example, the display 310 may be unfolded or folded by the second housing part 220 rotated with respect to the first housing part 210.

The display 310 may include a first display part 311 forming a portion of the front of the first housing part 210, a second display part 312 spaced apart from the first display part 311 and forming a portion of the front of the second housing part 220, and a third display part 313 extended from the first display part 311 to the second display part 312.

For example, the display 310 may be folded or unfolded according to the second housing part 220 rotated with respect to the first housing part 210.

For example, a shape of the third display part 313 may be changed according to a change from the unfolded state of the electronic device 200 to the folded state of the electronic device 200, unlike shapes of the first display part 311 and the second display part 312. For example, a shape of the third display part 313 may be changed according to a change from the folded state of the electronic device 200 to the unfolded state of the electronic device 200, unlike shapes of the first display part 311 and the second display part 312. For example, the third display part 313 may be configured to be bent between the first display part 311 and the second display part 312 when the electronic device 200 is folded, and straighten between the first display part 311 and the second display part 312 when the electronic device 200 is unfolded. For example, the first display part 311, the second display part 312, and the third display part 313 may form substantially one plane when the electronic device 200 is unfolded.

For example, unlike the shape of the third display part 313, the shapes (or overall shapes) of the first display part 311 and the second display part 312 may be maintained regardless (or independently) of a change from the unfolded state of the electronic device 200 to the folded state of the electronic device 200. For example, unlike the shape of the third display part 313, the shapes (or overall shapes) of the first display part 311 and the second display part 312 may be maintained regardless (or independently) of a change from the folded state of the electronic device 200 to the unfolded state of the electronic device 200.

The plate 320 may support the display 310. For example, the plate 320 may be disposed under the display 310 (e.g., in the -z direction) to support the display 310. For example, the plate 320 may be attached directly or indirectly to the display 310.

For example, the plate 320 may protect the display 310 from an external force (or impact) applied to the display 310. For example, the plate 320 may be used to shield noise and disperse heat. As a non-limited example, the plate 320 may be formed of stainless steel and/or carbon fiber reinforced plastic (CFRP). As a non-limited example, the plate 320 may be formed of a member having a plurality of layers configured with copper, aluminum, stainless steel, and/or stainless steel and aluminum.

The plate 320 may be disposed across over the hinge structure 250. For example, the plate 320 may be unfolded or folded by the second housing part 220 rotated with respect to the first housing part 210.

The plate 320 may include a first plate part 321, a second plate part 322 spaced apart from the first plate part 321, and a third plate part 323 extended from the first plate part 321 to the second plate part 322. For example, each of the first plate part 321 and the second plate part 322 are arranged with respect to the first display part 311 and the second display part 312, and the third plate part 323 may be arranged with respect to the third display part 313. For example, the third plate part 323 may be referred to as a flexible part 323.

As a non-limited example, the first plate part 321 may be disposed under the first display part 311 (e.g., in the -z direction) and may be attached directly or indirectly to the first display part 311. As a non-limited example, the second plate part 322 may be disposed under the second display part 312 (e.g., in the -z direction) and attached directly or indirectly to the second display part 312. As a non-limited example, the third plate part 323 may be disposed under the third display part 313 (e.g., in the -z direction) and attached directly or indirectly to the third display part 313.

As a non-limited example, the first plate part 321 may be disposed under a portion of the first display part 311 and attached directly or indirectly to a portion of the first display part 311. As a non-limited example, the second plate part 322 may be disposed under a portion of the second display part 312 and attached directly or indirectly to a portion of the second display part 312. As a non-limited example, the third plate part 323 may be disposed under a remaining portion of the first display part 311, a remaining portion of the second display part 312, and the third display part 313 and attached directly or indirectly to the remaining portion of the first display part 311, the remaining portion of the second display part 312, and the third display part 313.

As a non-limited example, the first plate part 321 may be disposed under the first display part 311 and a portion of the third display part 313 and attached directly or indirectly to the first display part 311 and the portion of the third display part 313. As a non-limited example, the second plate part 322 may be disposed under the second display part 312 and another portion of the third display part 313 and attached directly or indirectly to the second display part 312 and the other portion of the third display part 313. As a non-limited example, the third plate part 323 may be disposed under a remaining portion of the third display part 313 and attached directly or indirectly to a remaining portion of the third display part 313.

For example, the plate 320 may be folded or unfolded according to the second housing part 220 rotated with respect to the first housing part 210.

For example, unlike shapes of the first plate part 321 and the second plate part 322, a shape of the third plate part 323 may be changed according to a change from the unfolded state of the electronic device 200 to the folded state of the electronic device 200. For example, unlike the shapes of the first plate part 321 and the second plate part 322, the shape of the third plate part 323 may be changed according to a change from the folded state of the electronic device 200 to the unfolded state of the electronic device 200. For example, the third plate part 323 may be configured to be bent at least partially between the first plate part 321 and the second plate part 322 when the electronic device 200 is folded, and straighten between the first plate part 321 and the second plate part 322 when the electronic device 200 is unfolded. For example, the first plate part 321, the second plate part 322, and the third plate part 323 may form substantially one plane when the electronic device 200 is unfolded.

For example, unlike the shape of the third plate part 323, the shapes (or overall shapes) of the first plate part 321 and the second plate part 322 may be maintained regardless (or independently) of the change from the unfolded state of the electronic device 200 to the folded state of the electronic device 200. For example, unlike the shape of the third plate part 323, the shapes (or overall shapes) of the first plate part 321 and the second plate part 322 may be maintained regardless (or independently) of the change from the folded state of the electronic device 200 to the unfolded state of the electronic device 200.

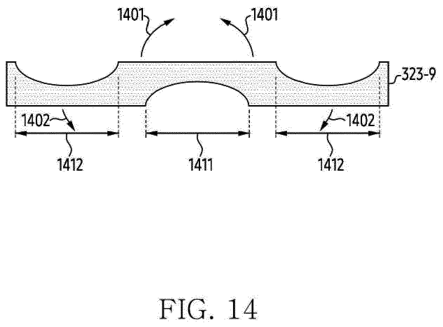

As a non-limited example, thickness (or width) of the first plate part 321 may be substantially uniform, thickness of the second plate part 322 may be substantially uniform, and thickness of the third plate part 323 may be substantially uniform. That thickness (or width) of the first plate part 321 is substantially uniform, thickness of the second plate part 322 is substantially uniform, and thickness of the third plate part 323 is substantially uniform is merely exemplary, and does not limit the implementations described or claimed within this document. For example, as illustrated in FIG. 14, the thickness of the third plate part 323 may be nonuniform (or uneven, or irregular).

As a non-limited example, thicknesses of the first plate part 321, the second plate part 322, and the third plate part 323 may be substantially the same as each other. That thicknesses of the first plate part 321, the second plate part 322, and the third plate part 323 are substantially the same as each other is merely exemplary, and does not limit the implementations described or claimed within this document.

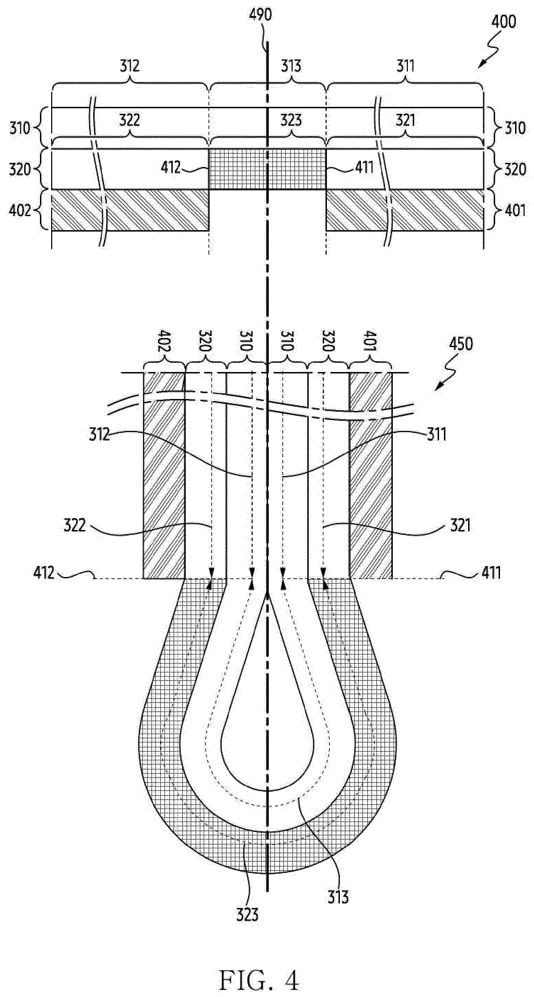

A positional relationship between the display 310 and the plate 320 is further illustrated within the description of FIG. 4.

FIG. 4 is a cross-sectional view illustrating an example in which an exemplary electronic device is cut along line A-A' of FIG. 3.

Referring to FIG. 4, a display 310 may be in direct or indirect contact with a plate 320. For example, the display 310 may be directly attached to the plate 320. For example, the display 310 may be indirectly attached to the plate 320. Although not illustrated in FIG. 4, at least one functional layer (or plate) may be interposed, positioned, or disposed between the display 310 and the plate 320.

As a non-limited example, a first plate part 321 may be aligned to a first display part 311, a second plate part 322 may be aligned to a second display part 312, and a third plate part 323 may be aligned to a third display part 313.

The electronic device 200 may include a first support plate 401 and a second support plate 402. For example, the first support plate 401 and the second support plate 402 may support the display 310. For example, the first support plate 401 and the second support plate 402 may support the plate 320. The first support plate 401 may be spaced apart from the second support plate 402. For example, the first support plate 401 may be attached directly or indirectly to at least a portion of the first plate part 321, and the second support plate 402 may be attached directly or indirectly to at least a portion of the second plate part 322. As a non-limited example, the first support plate 401 and the second support plate 402 may be formed of stainless steel.

Although not illustrated in FIG. 4, the electronic device 200 may further include at least one functional layer between the plate 320 and the first support plate 401 and/or between the plate 320 and the second support plate 402. For example, the at least one layer may include a layer including a portion of a digitizer embedded between the first support plate 401 and the first plate part 321 and another portion of the digitizer embedded between the second support plate 402 and the second plate part 322. For example, the at least one layer may include a layer including a film for reducing insertion of an external fine object into the third plate part 323. The film may be formed of thermoplastic polyurethane (TPU). For example, when the digitizer is included in the electronic device 200, the film may be embedded between the layer including the digitizer and the plate 320.

For example, the third plate part 323 in the plate 320 may be arranged with respect to the third display part 313. That the third plate part 323 is arranged with respect to the third display part 313 may indicate that the third plate part 323 is structurally arranged to affect the third display part 313. That the third plate part 323 is arranged with respect to the third display part 313 may indicate that the third plate part 323 is structurally arranged to be affected by the third display part 313.

For example, the third plate part 323 may be bent based on an axis 490 (or a folding axis 490) as the third display part 313 is bent. For example, the third plate part 323 may be configured to be straighten in an unfolded state 400 of the electronic device 200 and bent in a folded state 450 of the electronic device 200. For example, the third plate part 323, which is bent according to a change from the unfolded state 400 of the electronic device 200 to the folded state 450 of the electronic device 200, may include a plurality of slits for elasticity. The plurality of slits may include a plurality of openings, a plurality of slots, a plurality of apertures, a plurality of holes, or a plurality of gaps. The plurality of slits may be spaced apart from each other. The plurality of slits may form a lattice structure.

For example, when the third plate part 323 does not include the plurality of slits, creases may occur within the third plate part 323 due to rigidity of the first plate part 321 and the second plate part 322. For example, the third plate part 323 may reduce occurrence of the creases by including the plurality of slits having a deformed shape according to the change to the folded state 450 of the electronic device 200. For example, the third plate part 323 may reduce damage to the first plate part 321 and the second plate part 322 by including the plurality of slits.

For example, when the third plate part 323 includes the plurality of slits arranged in a single pattern, stress caused by a difference between rigidity of the first plate part 321 and rigidity of the third plate part 323 may be concentrated at a first boundary 411 between the first plate part 321 and the third plate part 323. For example, the stress may be caused by an impact transmitted to the electronic device 200.

For example, when the third plate part 323 includes the plurality of slits arranged in a single pattern, stress caused by a difference between rigidity of the second plate part 322 and the rigidity of the third plate part 323 may be concentrated at a second boundary 412 between the second plate part 322 and the third plate part 323. For example, the stress may be caused by an impact transmitted to the electronic device 200.

The third plate part 323 may include a first portion positioned along the first boundary 411, a second portion positioned along the second boundary 412, and a third portion between the first portion and the second portion.

The third plate part 323 may have a structure for reducing stress concentrated at the first boundary 411. For example, the third plate part 323 may have a structure for a gradual change in rigidity from the first plate part 321 to the third portion, in order to reduce the stress. For example, the third plate part 323 may include the first portion having rigidity between the rigidity of the first plate part 321 and the rigidity of the third portion.

The third plate part 323 may have a structure for reducing stress concentrated at the second boundary 412. For example, the third plate part 323 may have a structure for a gradual change in rigidity from the second plate part 322 to the third portion, in order to reduce the stress. For example, the third plate part 323 may include the second portion having rigidity between the rigidity of the second plate part 322 and the rigidity of the third portion.

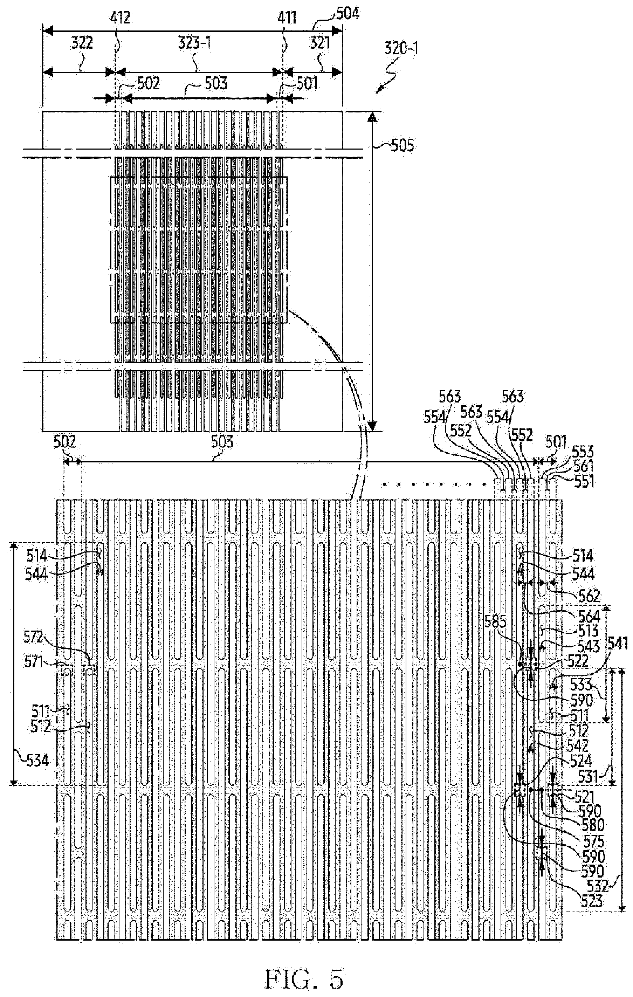

For example, the third plate part 323 may have a structure including first slits in each of the first portion and the second portion and second slits in the third portion. The structure is illustrated in FIGS. 5 to 7.

FIGS. 5 to 7 illustrate an example of a third plate part including first slits in each of a first portion and a second portion, and second slits in a third portion.

Referring to FIG. 5, a third plate part 323-1 in a plate 320-1 may include a first portion 501, a second portion 502, and a third portion 503. As a non-limited example, a width 504 of the third plate part 323-1 may be about 11.15 millimeter (mm) and a length 505 of the third plate part 323-1 may be about 66.938 mm.

Each of the first portion 501 and the second portion 502 may include first slits 511 parallel to an axis (e.g., the axis 490 of FIG. 4). The first slits 511 may have a longitudinal direction parallel to the axis. Each of the first slits 511 may have a first height 531 (e.g., about 3.3 mm, about 1.55 mm, about 0.675 mm, or about 0.2375 mm. For example, the first height 531 may indicate a length of each of the first slits 511 in a direction of the axis 490. The first height 531 may be sometimes referred to as a first length. The first slits 511 may have a first width 541 (e.g., about 0.17 mm). Each of the first portion 501 and the second portion 502 may further include first bridges 521 positioned between the first slits 511 and having the same length as each other. Each of the first bridges 521 may have a length 590 (e.g., about 0.2 mm). The plurality of slits in the first portion 501 may be described as being in a staggered, or offset, pattern or arrangement. Similarly, the plurality of slits in the second portion 502 may be described as being in a staggered, or offset, pattern or arrangement, and that pattern or arrangement may be the same as, or correspond to, that of the plurality of first slits.

The third portion 503 may include second slits 512 parallel to the axis 490. The second slits 512 may have a longitudinal direction parallel to the axis. Each of the second slits 512 may have a second height 532 (e.g., about 6.8 mm, about 3.3 mm, about 1.55 mm, or about 0.675 mm). For example, the second height 532 may indicate a length of each of the second slits 512 in the direction of the axis 490. The second height 532 may be sometimes referred to as a second length. Each of the second slits 512 may have a second width 542 (e.g., about 0.17 mm). The third portion 503 may further include second bridges 522 positioned between the second slits 512 and having the same length as each other. For example, each of the second bridges 522 may have the length 590. The plurality of slits in the third portion 503 may be described as being in a staggered, or offset, pattern or arrangement.

The second height 532 may be longer than the first height 531. For example, the first height 531 may be shorter than the second height 532 for rigidity of the first portion 501 higher than rigidity of the third portion 503. For example, the first height 531 may be shorter than the second height 532 for a gradual change in rigidity from the first plate part 321 to the third portion 503 and a gradual change in rigidity from the second plate part 322 to the third portion 503.

The first bridges 521 may be aligned to centers 575 of the second slits 512 (in a direction perpendicular to the axis). For example, the first bridges 521 may be aligned to the centers 575 of the second slits 512 for uniform distribution of the stress and visibility of the display 310. For example, the first bridges 521 may be aligned to the centers 575 for a regular arrangement of slits (e.g., the first slits 511) in the first portion 501 and slits (e.g., the second slits 512) in the third portion 503.

As a non-limited example, the first width 541 may be the same as the second width 542.

For example, each of the first portion 501 and the second portion 502 may further include third slits 513 positioned along the first slits 511. Each of the third slits 513 may have a third height 533 equal to the first height 531. Each of the third slits 513 may have a third width 543 equal to the first width 541. Each of the first portion 501 and the second portion 502 may further include third bridges 523 positioned between the third slits 513 and having the length 590.

For example, centers 580 of the third slits 513 may be aligned to the first bridges 521. For example, the first bridges 521 may be aligned to the centers 580 for a regular arrangement of slits (e.g., the first slits 511 and the third slits 513) in each of the first portion 501 and the second portion 502.

For example, each of the first portion 501 and the second portion 502 may include a line 551 and a line 553 positioned alongside (or beside) the line 551. The first slits 511 may be disposed along the line 551, and the third slits 512 may be disposed along the line 553. For example, each of the first portion 501 and the second portion 502 may include a rib 561. For example, the rib 561 may have a width 562 (e.g., about 0.17 mm). The or each rib may be described as an uninterrupted (i.e. uninterrupted by a slit, hole, or other aperture) portion or length of material.

For example, the third portion 503 may further include fourth slits 514 positioned along the second slits 512. Each of the fourth slits 514 may have a fourth height 534. Each of the fourth slits 514 may have a fourth width 544 equal to the second width 542. The third portion 503 may further include fourth bridges 524 positioned between the fourth slits 514 and having the length 590.

For example, centers 585 of the fourth slits 514 may be aligned to the second bridges 522. For example, the second bridges 522 may be aligned to the centers 585 for a regular arrangement of slits (e.g., the second slits 512 and the fourth slits 514) in the third portion 503.

For example, the third portion 513 may include lines of a set 552 and lines of a set 554 positioned between the lines of the set 552. The second slits 512 may be disposed along the lines of the set 552, and the fourth slits 514 may be disposed along the lines of the set 554. For example, the third portion 503 may include ribs 563 between each of the lines of the set 552 and each of the lines of the set 554. For example, the ribs 563 may be positioned between the set 552 and the set 554. For example, the ribs 563 may have a width 564. For example, the width 564 may be the same as the width 562.

For example, one of end portions 571 of each of the first slits 511 may be aligned to end portions 572 of each of the second slits 512. For example, the first height 531 of the first slits 511, the second height 532 of the second slits 512, and the length 590 of the first bridges 521 may be represented as the following equation.

[Equation 1]

$$H2 = H1 \times 2 + L$$

Equation 1 is merely an example to aid understanding, but is not limited thereto, and may be modified, applied, or extended in various ways.

In Equation 1, H1 indicates the first height 531, H2 indicates the second height 532, and L indicates the length 590.

For example, a shape of the first slits 511, a shape of the second slits 512, a shape of the third slits 513, and a shape of the fourth slits 514 may be the same. For example, the shape of the first slits 511, the shape of the second slits 512, the shape of the third slits 513, and the shape of the fourth slits 514 may be obround, as shown in FIG. 5.

The shape of the first slits 511, the shape of the second slits 512, the shape of the third slits 513, and the shape of the fourth slits 514 in FIG. 5 are exemplary only, and do not limit the implementations described or claimed within this document. For example, the shape of the first slits 511, the shape of the second slits 512, the shape of the third slits 513, and the shape of the fourth slits 514 may be rectangular, rounded rectangular, or oval. For another example, the first slits 511, the second slits 512, the third slits 513, and the fourth slits 514 may be a dumbbell-shaped, bowtie-shaped, hourglass-shaped, or bone-shaped.

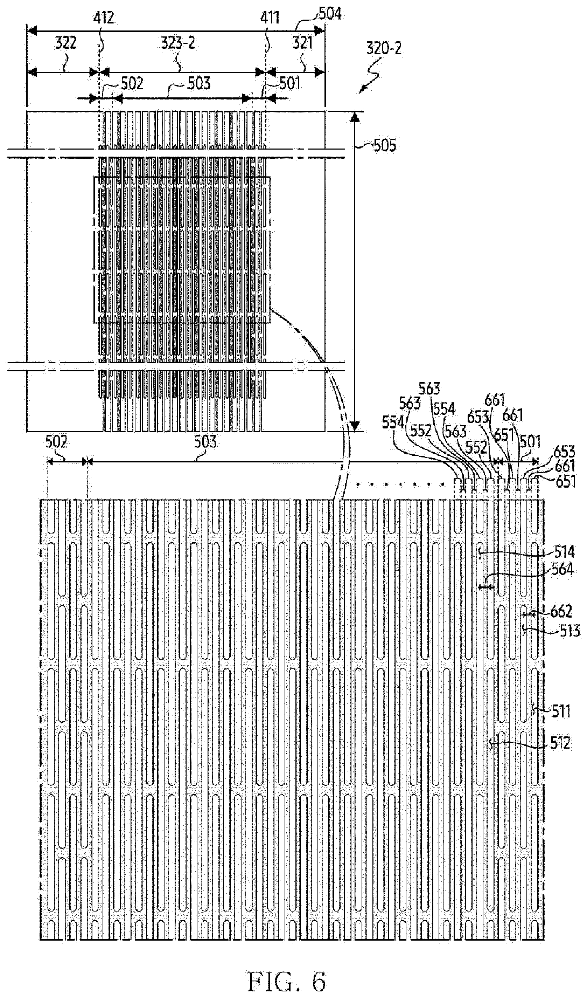

That the third plate part 323-1 of FIG. 5 includes a single line (e.g., the line 551) for the first slits 511 and a single line (e.g., the line 553) for the third slits 513 in each of the first portion 501 and the second portion 502 is exemplary only. Each of the first portion 501 and the second portion 502 may include multiple lines for the first slits 511 and multiple lines for the third slits 513. The first portion 501 and the second portion 502 respectively including multiple lines for the first slits 511 and multiple lines for the third slits 513 are illustrated in the description of FIG. 6.

Referring to FIG. 6, unlike the third plate part 323-1, a third plate part 323-2 within a plate 320-2 may include lines of a set 651 for first slits 511 and lines of a set 653 positioned between the lines of the set 651 within each of the first portion 501 and the second portion 502. The first slits 511 may be disposed along the lines of the set 651, and the third slits 513 may be disposed along the lines of the set 653. For example, each of the first portion 501 and the second portion 502 may include ribs 661 between each of the lines of the set 651 and each of the lines of the set 653. For example, the ribs 661 may be positioned between the set 651 and the set 653. For example, the ribs 661 may have a width 662. The width 662 may be the same as each of the width 562 and the width 564.

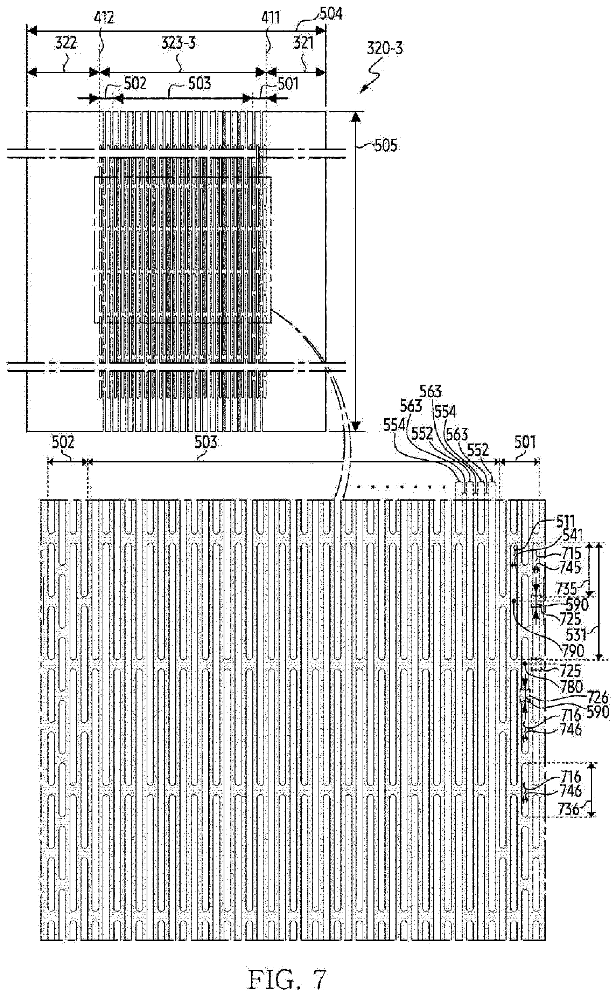

That each of the third plate part 323-1 of FIG. 5 and the third plate part 323-2 of FIG. 6 includes only the first slits 511 and the third slits 513 within each of the first portion 501 and the second portion 502 is exemplary only. Each of the first portion 501 and the second portion 502 may further include additional slits for a gradual change in rigidity from the first plate part 321 to the third portion 503 and a gradual change in rigidity from the second plate part 322 to the third portion 503. Each of the first portion 501 and the second portion 502 including the additional slits is illustrated in the description of FIG. 7.

Referring to FIG. 7, unlike the third plate part 323-1 and the third plate part 323-2, the third plate 323-3 in a plate 320-3 may further include fifth slits 715 in each of the first portion 501 and the second portion 502.

Each of the fifth slits 715 may have a third height 735 (e.g., about 1.55 mm, about 0.675 mm, or about 0.2375 mm). The fifth slits 715 may have a fifth width 745 (e.g., about 0.17 mm). Each of the first portion 501 and the second portion 502 may further include fifth bridges 725 positioned between the fifth slits 715 and having the same length as each other. Each of the fifth bridges 725 may have the length 590 (e.g., about 0.2 mm).

For example, the fifth slits 715 in the first portion 501 may be closer to the first boundary 411 than the first slits 511 in the first portion 501 for a gradual change in rigidity from the first plate part 321 to the third portion 503, and the fifth slits 715 in the second portion 502 may be closer to the second boundary 412 than the first slits 511 in the second portion 502 for a gradual change in rigidity from the second plate part 322 to the third portion 503.

For example, the fifth height 735 may be shorter than the first height 531. For example, the fifth height 735 may be shorter than the first height 531 for a gradual change in rigidity from the first plate part 321 to the third portion 503 and a gradual change in rigidity from the second plate part 322 to the third portion 503.

The fifth bridges 725 may be aligned to centers 790 of the first slits 511. For example, the fifth bridges 725 may be aligned to the centers 790 of the first slits 511 for uniform distribution of the stress and visibility of the display 310. For example, the fifth bridges 725 may be aligned to the centers 790 for a regular arrangement.

For example, each of the first portion 501 and the second portion 502 may further include sixth slits 716 positioned along the fifth slits 715. Each of the sixth slits 716 may have a sixth height 736 equal to the fifth height 735. Each of the sixth slits 716 may have a sixth width 746 equal to the first width 541. Each of the first portion 501 and the second portion 502 may further include sixth bridges 726 positioned between the sixth slits 716 and having the length 590.

For example, centers 780 of the sixth slits 716 may be aligned to the fifth bridges 725. For example, the fifth bridges 725 may be aligned to the centers 780 for a regular arrangement of slits (e.g., first slits 511, third slits 513, fifth slits 715, and sixth slits 716) in each of the first portion 501 and the second portion 502.

The shape of the fifth slits 715 and the shape of the sixth slits 716 in FIG. 7 are only exemplary and do not limit the implementations described or claimed in this document. For example, the shape of the fifth slits 715 and the shape of the sixth slits 716 may be rectangular, rounded rectangular, or oval. For another example, the fifth slits 715 and the sixth slits 716 may be dumbbell-shaped, bowtie-shaped, hourglass-shaped, or bone-shaped.

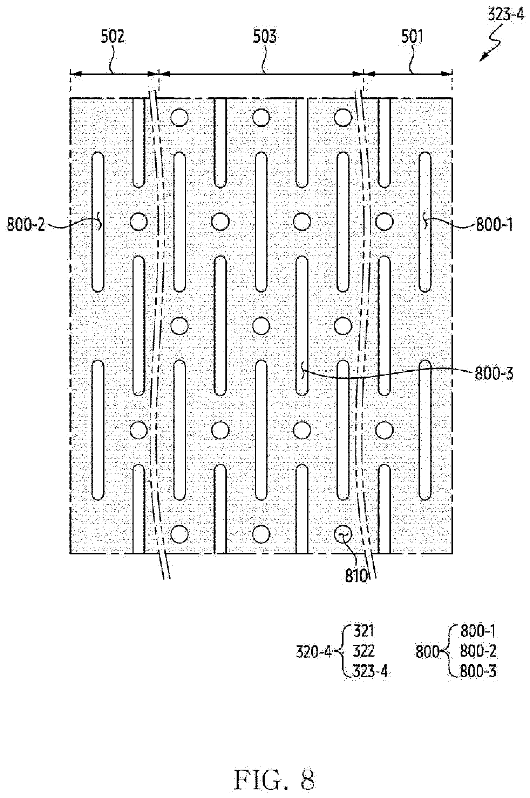

For example, the third plate part 323 may include additional holes for a gradual change in rigidity from the first plate part 321 to the third portion and a gradual change in rigidity from the second plate part 322 to the third portion. The third plate part 323 including the additional holes is illustrated in FIG. 8.

FIG. 8 illustrates an example of a third plate part including slits and holes.

Referring to FIG. 8, a third plate part 323-4 in a plate 320-4 may include a plurality of slits 800 arranged in a single (e.g. regular) pattern. This pattern may be described as a staggered, or offset, pattern, with centers of slits in one column (or line) being aligned with the centers of bridges (between slits) in the next, or adjacent, column for example. For example, the plurality of slits 800 may be parallel to an axis 490. For example, the plurality of slits 800 may include slits 800-1 positioned in a first portion 501, slits 800-2 positioned in a second portion 502, and slits 800-3 positioned in a third portion 503. As a non-limited example, the density of the slits 800-1 in the first portion 501, the density of the slits 800-2 in the second portion 502, and the density of the slits 800-3 in the third portion 503 may be the same.

For example, the third plate part 323-4 may include a plurality of holes. For example, the plurality of holes may be arranged in a single (e.g. regular) pattern. For example, the number of the plurality of holes may be smaller than the number of the plurality of slits 800.

For example, the plurality of holes may be disposed between slits in the third plate part 323-4. For example, some of the plurality of holes and the plurality of slits 800 may form a lattice structure within a portion (e.g., the third portion 503) of the third plate part 323-4. For example, some of the plurality of holes and the plurality of slits 800 may form a lattice structure for a uniform distribution of the stress and visibility of the display 310. Each hole may, for example, be located in the center of a bridge between two adjacent slits in a particular column or line. Each hole may thus divide a respective bridge into two bridge portions, one on either side of the hole in the longitudinal direction.

As a non-limited (or non-limiting) example, each of the plurality of holes may be aligned to centers of two slits in the third plate part 323-4 arranged alongside each of the plurality of holes. For example, each of the plurality of holes may be aligned to the centers of the two slits for a uniform distribution of the stress and visibility (and/or appearance) of the display 310.

The number of holes 810 in the third portion 503 may be greater than the number of holes in the first portion 501 for a gradual change in rigidity from the first plate part 321 to the third portion 503. The number of holes 810 in the third portion 503 may be greater than the number of holes in the second portion 502 for a gradual change in rigidity from the second plate part 322 to the third portion 503. As a non-limited example, the number of the holes in the first portion 501 may be the same as the number of the holes in the second portion 502. As a non-limited example, the plurality of holes may be included only in the third portion 503. For example, the number of the holes in the first portion 501 may be 0, and the number of the holes in the second portion 502 may be 0.

The shape of the plurality of slits 800 in FIG. 8 is only exemplary and does not limit the implementations described or claimed in this document. For example, the shape of the plurality of slits 800 may be rectangular, rounded rectangular, or oval. For another example, the plurality of slits 800 may be dumbbell-shaped, bowtie-shaped, hourglass-shaped, or bone-shaped.

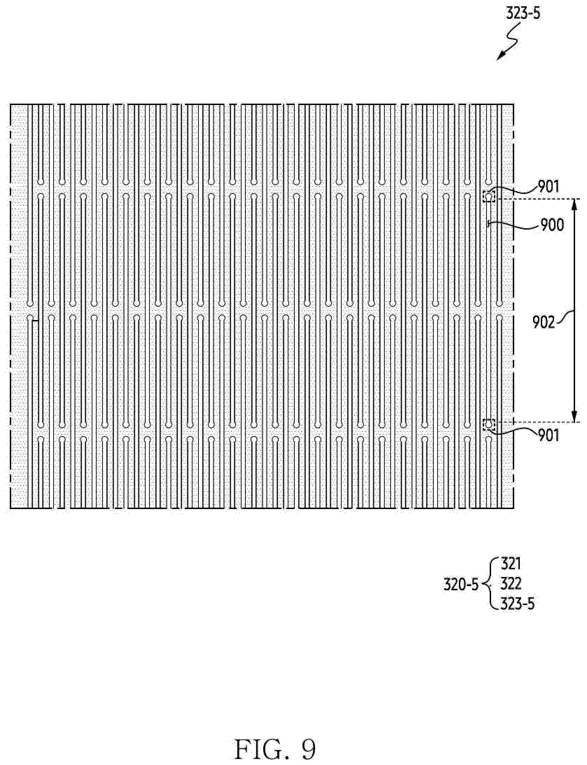

For example, the third plate part 323 may include slits each having a shape for uniform distribution of the stress. For example, the slits may be arranged in a single pattern. For example, the shape of the slits may be variously implemented. The shape is illustrated in the description of FIG. 9.

FIGS. 9 to 11 illustrate an example of shapes of openings arranged in a single pattern within a third plate part.

Referring to FIG. 9, a third plate part 323-5 in a plate 320-5 may include a plurality of slits 900 arranged in a single pattern. For example, a plurality of slits 900 may be parallel to an axis 490 (not shown). For example, the plurality of slits 900 may be uniformly positioned within the third plate part 323-5. For example, each of the plurality of slits 900 may be dumbbell shaped. For example, each of the plurality of slits 900 may include an end portion 901 and a connection portion 902 positioned between the end portions 901 and connecting the end portions 901. For example, since the stress applied to each end portions of a slit is greater than the stress applied to a connection portion of the slit connecting the end portions, the thickness (or average thickness) (or width (or average width) of each of the end portions 901 may be greater than the thickness of the connection portion 902.

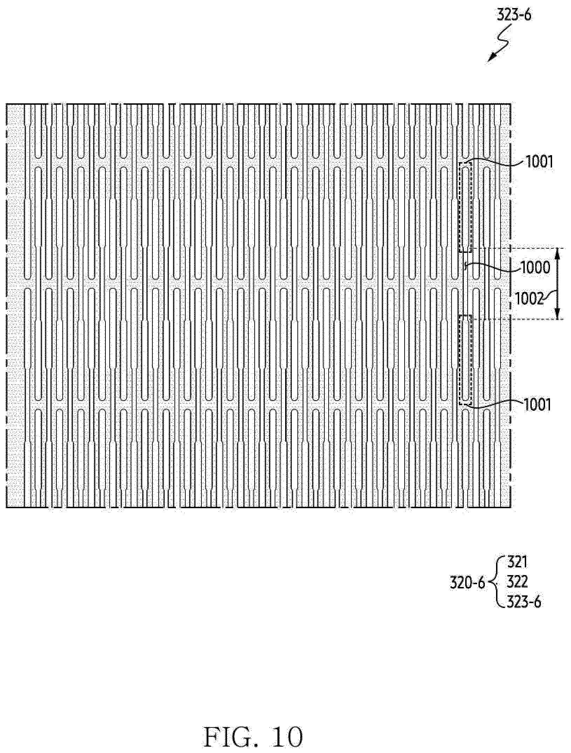

Referring to FIG. 10, a third plate part 323-6 in a plate 320-6 may include a plurality of slits 1000 arranged in a single pattern. For example, the plurality of slits 1000 may be parallel to an axis 490 (not shown). For example, the plurality of slits 1000 may be uniformly positioned within the third plate part 323-6. For example, each of the plurality of slits 1000 may be dumbbell shaped. For example, each of the plurality of slits 1000 may include an end portion 1001 and a connection portion 1002 positioned between the end portions 1001 and connecting the end portions 1001. For example, since the stress applied to each end portion of a slit is greater than the stress applied to a connection portion of the slit connecting the end portions, the thickness (or average thickness) (or width (or average width) of each of the end portions 1001 may be greater than the thickness of the connection portion 1002. For example, since an area of each of the end portions 1001 is larger than an area of each of the end portions 901, the thickness of the connection portion 1002 may be smaller than the thickness of the connection portion 902.

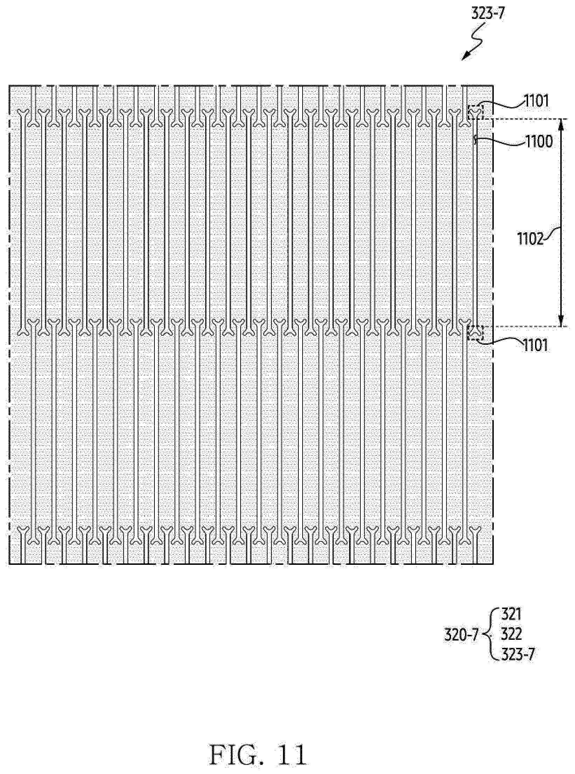

Referring to FIG. 11, a third plate part 323-7 in a plate 320-7 may include a plurality of slits 1100 arranged in a single pattern. For example, the plurality of slits 1100 may be parallel to an axis 490 (not shown). For example, the plurality of slits 1100 may be uniformly positioned within the third plate part 323-7. For example, each of the plurality of slits 1100 may be branch shaped. For example, each of the plurality of slits 1100 may include a center portion 1102 parallel to the axis 490. For example, each of the plurality of slits 1100 may include a branch portion 1101 from the center portion 1102 for flexibility within an unfolded state 450 of the electronic device 200. For example, each of the branch portion 1101 may include end portions that are inclined at an obtuse angle with respect to the center portion 1102 and extend from the center portion 1102.

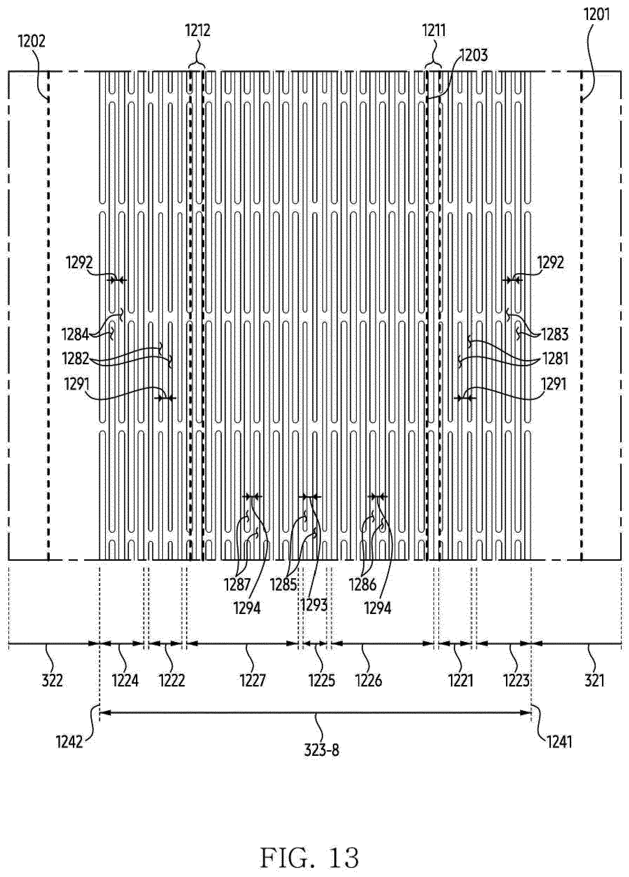

For example, the third plate part 323 may include a structure for increasing rigidity of at least one portion (or position) of the third plate part 323 where stress is concentrated. For example, for increasing the rigidity of the at least one portion, the third plate part 323 may include slits having a first width in at least one other portion different form the at least one portion of the third plate part 323, and slits having a second width narrower than the first width in the at least one portion. The third plate part 323 that includes slits having the second width in the at least one portion and slits having the first width in the at least one other portion is illustrated in the description of FIGS. 12 and 13.

FIG. 12 illustrates an example of a positional relationship between a hinge structure and a third plate part.

FIG. 13 illustrates an example of a third plate part including slits having different widths.

Referring to FIGS. 12 and 13, an electronic device 200 may include a hinge structure 1200 instead of a hinge structure 250. For an unfolded state 400 and a folded state 450 of the electronic device 200, the hinge structure 1200 may include a first support member (not shown), a first rotation member 1201 rotatably coupled to the first support member and coupled to a first housing part 210, and a second rotation member 1202 rotatably coupled to the first support member and coupled to a second housing part 220. The hinge structure 1200 may further include a second support member 1203 coupled to the first support member and separated from the first rotation member 1201 and the second rotation member 1202. The second support member 1203 may be referred to as a center bar.

The second support member 1203 may support a third display part 313 moved to the second support member 1203 according to a change from the unfolded state 400 of the electronic device 200 to the folded state 450 of the electronic device 200. For example, a first angle at which the first rotation member 1201 is rotated with respect to the second support member 1203 to change the unfolded state 400 of the electronic device 200 to the folded state 450 of the electronic device 200 may be different from a second angle at which the first housing part 210 is rotated with respect to the second support member 1203 to change the unfolded state 400 of the electronic device 200 to the folded state 450 of the electronic device 200. For example, the first angle may be greater than the second angle. For example, since the first angle is greater than the second angle, the third display part 313 may be moved in a direction 1290. The second support member 1203 may support the third display part 313 moved in the direction 1290.

For example, a third plate part 323-8 may include a first portion 1221, a second portion 1222, a third portion 1223, and a fourth portion 1224. For example, the first portion 1221 may be arranged with respect to a first gap 1211 between the first rotation member 1201 and the second support member 1203. For example, the second portion 1222 may be arranged with respect to a second gap 1212 between the second rotation member 1202 and the second support member 1203. For example, the third portion 1223 may be positioned between a first boundary 1241 and the first portion 1221. The first boundary 1241 may be positioned between the first plate part 321 and the third plate part 323-8. For example, the fourth portion 1224 may be positioned between a second boundary 1242 and the second portion 1222. The second boundary 1242 may be positioned between the second plate part 322 and the third plate part 323-8.

For example, for the rigidity of the first portion 1221 and the second portion 1222, widths of first slits 1281 in the first portion 1221 and second slits 1282 in the second portion 1222 may be narrower than widths of third slits 1283 in the third portion 1223 and fourth slits 1284 in the fourth portion 1224. For example, the first portion 1221 may be disposed on the first rotation member 1201 along the first gap 1211 and the second portion 1222 may be disposed on the second rotation member 1202 along the second gap 1212. According to a change from the unfolded state 400 of the electronic device 200 to the folded state 450 of the electronic device 200, a first direction (e.g., forward rotation) (e.g., a first direction 1401) of rotation of a portion of the third plate part 323-8 may be different from a second direction (e.g., reverse rotation) (e.g., a second direction 1402) of rotation of another portion of the third plate part 323-8. For example, a direction in which the portion of the third plate part 323-8 is bent when the electronic device 200 is folded may be different from a direction in which the other portion of the third plate part 323-8 is bent when the electronic device 200 is folded.

For example, the first portion 1221 and the second portion 1222 may have rigidity lower than the third portion 1223 and the fourth portion 1224 according to the second direction different from the first direction. For example, the width of the first slits 1281 and the second slits 1282 may be narrower than the width of the third slits 1283 and the fourth slits 1284, in order to compensate for the rigidity. For example, the width of each of the first slits 1281 and the second slits 1282 may indicate a length of each of the first slits 1281 and the second slits 1282 in a direction perpendicular to a folding axis of the foldable electronic device 200, the width of each of the third slits 1283 and the fourth slits 1284 may indicate a length of each of the third slits 1283 and the fourth slits 1284 in a direction perpendicular to the folding axis.

For example, the width 1291 of ribs positioned in the first portion 1221 and the second portion 1222 may be wider than the width 1292 of ribs positioned in the third portion 1223 and the fourth portion 1224. However, it is not limited thereto. For example, unlike illustrated in FIG. 13, the width 1291 may be equal to the width 1292.

For example, a fifth portion 1225 may be arranged with respect to the second support member 1203. For example, a sixth portion 1226 may be positioned between the first portion 1221 and the fifth portion 1225. For example, a seventh portion 1227 may be positioned between the second portion 1222 and the fifth portion 1225.

For example, the width of fifth slits 1285 in the fifth portion 1225 may be narrower than the width of sixth slits 1286 in the sixth portion 1226 and seventh slits 1287 in the seventh portion 1227. For example, the fifth portion 1225 may be in contact with the second support member 1203 by the third display part 313 moved in the direction 1290 according to the folded state 450 of the electronic device 200. For example, the fifth portion 1225 may be disposed along a central axis of the second support member 1203. For example, the width of the fifth slits 1285 may be narrower than the width of the sixth slits 1286 and the seventh slits 1287, in order to compensate for rigidity according to the contact.

For example, the width 1293 of ribs positioned in the fifth portion 1225 may be wider than the width 1294 of ribs positioned in the sixth portion 1226 and the seventh portion 1227. However, it is not limited thereto. For example, unlike illustrated in FIG. 13, the width 1293 may be equal to the width 1294. As a non-limited example, the width 1293 may be equal to the width 1291, and the width 1294 may be equal to the width 1292.

For example, the width of the first slits 1281, the width of the second slits 1282, and the width of the fifth slits 1285 may be the same. For example, the width of the third slits 1283, the width of the fourth slits 1284, the width of the sixth slits 1286, and the width of the seventh slits 1287 may be the same.

For example, a height of the first slits 1281, a height of the second slits 1282, a height of the third slits 1283, a height of the fourth slits 1284, a height of the fifth slits 1285, a height of the sixth slits 1286, and a height of the seventh slits 1287 may be the same. For example, the first slits 1281, the second slits 1282, the third slits 1283, the fourth slits 1284, the fifth slits 1285, the sixth slits 1286, and the seventh slits 1287 may be arranged in a single pattern. For example, an end portion of a portion of the first slits 1281 may be aligned to a center of another portion of the first slits 1281. For example, an end portion of a portion of the second slits 1282 may be aligned to a center of another portion of the second slits 1282. For example, an end portion of a portion of the third slits 1283 may be aligned to a center of another portion of the third slits 1283. An end portion of a portion of the fourth slits 1284 may be aligned to a center of another portion of the fourth slits 1284. For example, the first slits 1281, the second slits 1282, the third slits 1283, the fourth slits 1284, the fifth slits 1285, the sixth slits 1286, and the seventh slits 1287 may have a single pattern for uniform distribution of the stress and visibility of the display 310.

For example, a first direction (e.g., forward rotation) of a rotation of a portion of the third plate part 323 caused by the hinge structure 1200 may be different from a second direction (e.g., reverse rotation) of a rotation of another portion of the third plate part 323 caused by the hinge structure 1200. For example, the thickness of the third plate part 323 may not be uniform to compensate for the second direction different from the first direction. The non-uniform thickness of the third plate part 323 is illustrated within the description of FIG. 14.

FIG. 14 illustrates an example of thickness of a third plate part.

Referring to FIG. 14, a third plate part 323-9 may include a first portion 1411 having a non-uniform thickness to compensate for a rotation in a first direction 1401. For example, the third plate part 323-9 may include a second portion 1412 having a non-uniform thickness to compensate for a rotation in a second direction 1402. The first portion 1411 and the second portion 1412 may be formed by a half etching technique. For example, the third plate part 323-9 may be made by applying the half etching technique to a plate part having a single thickness.

The third plate part 323-9 of FIG. 14 may be combined with one of the third plate part 323-1 to the third plate part 323-8.

As described above, a foldable electronic device may comprise a display including a first display part, a second display part spaced apart from the first display part, and a third display part extended from the first display part to the second display part, the third display part configured to be bent based on an axis when the foldable electronic device is folded, and a plate disposed under the display to support the display. The plate may include a first plate part, a second plate part spaced apart from the first plate part, and a third plate part extended from the first plate part to the second plate part and arranged with respect to the third display part. The third plate part may be configured to be at least partially bent when the foldable electronic device is folded. The third plate part may include a first portion positioned along a first boundary between the first plate part and the third plate part, a second portion positioned along a second boundary between the second plate part and the third plate part, and a third portion between the first portion and the second portion. Each of the first portion and the second portion may include first slits, having a first length, and having a longitudinal direction parallel to the folding axis, and first bridges positioned between the first slits. The third portion may include second slits, having a second length longer than the first length, and having a longitudinal direction parallel to the folding axis, and second bridges positioned between the second slits. The first bridges may be aligned to centers of the second slits in a direction perpendicular to the folding axis.

For example, the first bridges may have the same length as each other, and the second bridges may have the same length as each other. Each of the first portion and the second portion may further include third slits, having the first length, positioned along the first slits and third bridges, having the same length as each other, positioned between the third slits. For example, the third portion may further include fourth slits, having the second length, positioned along the second slits, and fourth bridges, having the same length as each other, positioned between the fourth slits. For example, centers of the third slits may be aligned to the first bridges in a direction perpendicular to the folding axis. For example, centers of the fourth slits may be aligned to the second bridges in a direction perpendicular to the folding axis.

For example, each of the first portion and the second portion may include a first set of lines parallel to the folding axis and a second set of lines being parallel to the folding axis and being positioned between the first set of lines. For example, the third portion may include a third set of lines parallel to the folding axis and a fourth set of lines being parallel to the folding axis and being positioned between the fourth set of lines. For example, the first slits may be disposed along the first set of the lines. For example, the second slits may be disposed along the third set of the lines. For example, the third slits may be disposed along the second set of the lines. For example, the fourth slits may be disposed along the fourth set of the lines.

For example, each of the first portion and the second portion may include ribs positioned between the first set and the second set. For example, the third portion may include ribs positioned between the third set and the fourth set.

For example, widths of the ribs in each of the first portion and the second portion may be equal to a width of the ribs in the third portion.

For example, the first bridges, the second bridges, the third bridges, and the fourth bridges may have the same length as each other.

For example, the first bridges may be aligned to the centers of the fourth slits in a direction perpendicular to the folding axis.

For example, one of end portions of each of the first slits may be aligned to end portions of each of the second slits in a direction perpendicular to the folding axis.

For example, shapes of the first slits and the second slits may be rectangular. For example, shapes of the first slits and the second slits may be rounded rectangles. For example, shapes of the first slits and the second slits may be obround.

For example, each of the first portion and the second portion may further include third slits, having a third length shorter than the first length, and having a longitudinal direction parallel to the folding axis, and third bridges, having the same length as each other, positioned between the third slits. For example, the third slits may be closer to the first boundary and the second boundary than the first slits. For example, the third bridges may be aligned to centers of the first slits in a direction perpendicular to the folding axis.

For example, the second length is determined by $H2 = H1 \times 2 + L$. Herein, H2 denotes the second length, H1 denotes the first length, and L denotes length of each of the first bridges.

As described above, a foldable electronic device may comprise a housing including a first housing part and a second housing part, and a hinge structure for an unfolded state and a folded state of the foldable electronic device, the hinge structure including a first support member, a first rotation member rotatably coupled to the first support member and coupled to the first housing part, a second rotation member rotatably coupled to the first support member and coupled to the second housing part. The hinge structure may include a second support member coupled to the first support member and separated from the first rotation member and the second rotation member. The display may form at least portion of a front of the housing. The display may include a first display part, a second display part spaced apart from the first display part, and a third display part extended from the first display part to the second display part and configured to bend between the first display part and the second display part in the folded state provided by the hinge structure. The foldable electronic device may include a plate, disposed under the display to support the display, including a surface facing the first rotation member, the second rotation member, and the second support member. The plate may include a first plate part, a second plate part spaced apart from the first plate part, and a third plate part extended from the first plate part to the second plate part and arranged with respect to the third display part. The third plate part may be configured to bend in the folded state. The second support member may be configured to support the third display part moved to the second support member according to change from the unfolded state to the folded state. The third plate part may include a first portion arranged with respect to a first gap between the first rotation member and the second support member, a second portion arranged with respect to a second gap between the second rotation member and the second support member, a third portion positioned between the first portion and a first boundary between the first plate part and the third plate part, and a fourth portion positioned between the second portion and a second boundary between the second plate part and the third plate part. Width of first slits in the first portion and second slits in the second portion may be narrow than width of third slits in the third portion and fourth slits in the fourth portion. The width of each of the first slits and the second slits may indicate a length of each of the first slits and the second slits in a direction perpendicular to a folding axis of the foldable electronic device. The width of each of the third slits and the fourth slits may indicate a length of each of the third slits and the fourth slits in a direction perpendicular to a folding axis of the foldable electronic device.

For example, the third plate part may further include a fifth portion arranged with respect to the second support member, a sixth portion between the fifth portion and the first portion, and a seventh portion between the fifth portion and the second portion. For example, a width of fifth slits in the fifth portion may be narrower than that of sixth slits in the sixth portion and seventh slits in the seventh portion.

For example, widths of the first slits, widths of the second slits, and widths of fifth slits may be equal to each other, and widths of the third slits, widths of the fourth slits, widths of sixth slits, and widths of seventh slits may be equal to each other.

For example, the fifth portion may be disposed along a center axis of the second support portion.

For example, the first portion may be disposed on the first rotation member along the first gap, and the second portion may be disposed on the second rotation member along the second gap.

For example, a height of the first slits, a height of the second slits, a height of the third slits, and a height of the fourth slits may be equal to each other.

For example, an end portion of a portion of the first slits may be aligned to a center of another portion of the first slits. For example, an end portion of a portion of the second slits may be aligned to a center of another portion of the second slits. For example, an end portion of a portion of the third slits may be aligned to a center of another portion of the third slits. For example, an end portion of a portion of the fourth slits may be aligned to a center of another portion of the fourth slits.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.   A foldable electronic device comprising:

a display including a first display part, a second display part spaced apart from the first display part, and a third display part extended from the first display part to the second display part, the third display part configured to be bent based on a folding axis when the foldable electronic device is folded;
a plate disposed under the display to support the display,
wherein the plate includes a first plate part, a second plate part spaced apart from the first plate part, and a third plate part extended from the first plate part to the second plate part and arranged with respect to the third display part, wherein the third plate part is configured to be at least partially bent when the foldable electronic device is folded, wherein the third plate part includes:

a first portion positioned along a first boundary between the first plate part and the third plate part;
a second portion positioned along a second boundary between the second plate part and the third plate part; and
a third portion between the first portion and the second portion,
wherein each of the first portion and the second portion includes:

first slits, having a first length, and having a longitudinal direction parallel to the folding axis; and
first bridges positioned between the first slits,
wherein the third portion includes:

second slits, having a second length longer than the first length, and having a longitudinal direction parallel to the folding axis; and
second bridges positioned between the second slits, and
wherein the first bridges are aligned to centers of the second slits in a direction perpendicular to the folding axis.

2. The foldable electronic device of claim 1, wherein the first bridges have the same length as each other, and wherein the second bridges have the same length as each other.

3. The foldable electronic device of claim 2, wherein each of the first portion and the second portion further includes:

third slits, having the first length, positioned along the first slits; and
third bridges, having the same length as each other, positioned between the third slits,
wherein the third portion further includes:

fourth slits, having the second length, positioned along the second slits; and
fourth bridges, having the same length as each other, positioned between the fourth slits,
wherein centers of the third slits are aligned to the first bridges in a direction perpendicular to the folding axis, and
wherein centers of the fourth slits are aligned to the second bridges in a direction perpendicular to the folding axis.

4. The foldable electronic device of claim 3, wherein each of the first portion and the second portion includes a first set of lines parallel to the folding axis and a second set of lines being parallel to the folding axis and being positioned between the first set of lines,

wherein the third portion includes a third set of lines parallel to the folding axis and a fourth set of lines being parallel to the folding axis and being positioned between the fourth set of lines,
wherein the first slits are disposed along the first set of the lines,
wherein the second slits are disposed along the third set of the lines,
wherein the third slits are disposed along the second set of the lines, and
wherein the fourth slits are disposed along the fourth set of the lines.

5. The foldable electronic device of claim 4, wherein each of the first portion and the second portion includes ribs positioned between the first set and the second set, and wherein the third portion includes ribs positioned between the third set and the fourth set.

6. The foldable electronic device of claim 5, wherein width of the ribs in each of the first portion and the second portion is equal to width of the ribs in the third portion.

7. The foldable electronic device of claim 3, wherein the first bridges, the second bridges, the third bridges, and the fourth bridges have the same length as each other.

8. The foldable electronic device of claim 3, wherein the first bridges are aligned to the centers of the fourth slits in a direction parallel to the folding axis.

9. The foldable electronic device of claim 1, wherein one of end portions of each of the first slits is aligned to end portions of each of the second slits in a direction parallel to the folding axis.

10. The foldable electronic device of claim 1, wherein shapes of the first slits and the second slits are rectangle.

11. The foldable electronic device of claim 1, wherein shapes of the first slits and the second slits are rounded rectangle.

**12.** The foldable electronic device of claim 1, wherein shapes of the first slits and the second slits are obround.

**13.** The foldable electronic device of claim 1, wherein each of the first portion and the second portion further includes:

third slits, having a third length shorter than the first length, and having a longitudinal direction parallel to the folding axis; and
third bridges, having the same length as each other, positioned between the third slits,
wherein the third slits are closer to the first boundary and the second boundary than the first slits,
wherein the third bridges are aligned to centers of the first slits in a direction parallel to the folding axis.

**14.** The foldable electronic device of claim 1, wherein the second length is determined by a following equation:

$$H2 = H1 \times 2 + L,$$

where H2 denotes the second length, H1 denotes the first length, and L denotes length of each of the first bridges.

**15.** The foldable electronic device of claim 1, further comprising:
a first support plate attached to at least portion of the first plate part under the first plate part to support the plate; and
a second support plate attached to at least portion of the second plate part under the second plate part to support the plate.

100

ELECTRONIC DEVICE 101

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

PROCESSOR 120

MAIN PROCESSOR 121

AUXILIARY PROCESSOR 123

POWER MANAGE-MENT MODULE 188

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

SECOND NETWORK 199

FIRST NETWORK 198

ELECTRONIC DEVICE 104

ELECTRONIC DEVICE 102

SERVER 108

FIG. 1

FIG. 2A

FIG. 2B

200

230

221

220

222

227

262  261

215  211  210

263

264

212

235

253

265

254

252

251

216

228

250 { 251
       252
       253
       254

260 { 261
       262
       263
       264
       265

FIG. 2C

FIG. 3

FIG. 4

FIG. 5

FIG. 6

FIG. 7

FIG. 8

323-5

901
900

902

901

320-5 { 321
322
323-5

FIG. 9

FIG. 10

FIG. 11

FIG. 12

FIG. 13

FIG. 14